Europäisches Patentamt

European Patent Office

Office européen des brevets

(11) Publication number: **0 339 916**

**A1**

## (12) EUROPEAN PATENT APPLICATION

(21) Application number: 89304080.8

(51) Int. Cl.⁴: **G11B 23/087** , **G11B 23/28**

(22) Date of filing: 19.04.89

(30) Priority: **26.04.88 GB 8809844**
**24.05.88 GB 8812284**
**30.06.88 GB 8815588**

(43) Date of publication of application:
**02.11.89 Bulletin 89/44**

(84) Designated Contracting States:
**AT BE CH DE ES FR GB GR IT LI LU NL SE**

(71) Applicant: **SHAPECOURT LIMITED**
**101 Sandford Road**
**Birmingham B12 9BU(GB)**

(72) Inventor: **Davis, Raymond Leslie**
**6 Poplar Avenue**
**West Bromwich West Midlands B70 6HP(GB)**

(74) Representative: **Spruce, George Philip et al**
**George Fuery & Co. Whitehall Chambers 23**
**Colmore Row**
**Birmingham B3 BL2(GB)**

(54) **Video or other tape or film cassettes.**

(57) Cassette for recording tape or other medium, typically a VHS video tape cassette, has built-in control means (18, 30) including a stop element (56) acting automatically to prevent a winding or rewinding operation of the tape or other medium (14) whereby a user can effect a single play through of the tape or medium only; the cassette also including a key operated or other coded lock (60) which has to be operated e.g. by a video library or other control authority to reset the control means for further operation of the cassette. A tamper-proof counter (52) is also preferably incorporated to record the number of times the tape or other medium has been played. The invention enables video hire charges to be related to the number of playings of a tape for example.

Fig 1

## VIDEO AND OTHER TAPE OR FILM CASSETTES

This invention relates to cassettes for recording media such as tape or film, particularly but not exclusively magnetic video tape.

More specifically the invention applies to a cassette assembly (hereinafter referred to as "a cassette assembly of the kind described") comprising a tamper-resistant housing, main and take-up reels operatively disposed within the housing for connection with play-back and/or recording apparatus using the assembly whereby the reels are selectively driven to wind film, tape or other recording medium forward off the main onto the take-up reel as for playing a pre-recorded medium and back onto the main reel as for rewinding the medium following play through.

The invention is particularly usefully embodied in cassette assemblies of the kind described which incorporate or are compatible with the widely used VHS system which is now the almost universal standard for video cassette recorders in general use in the home and elsewhere and hence for video tape recordings on general sale and/ or available for loan or hire from video libraries. The VHS system and the construction of the standard cassettes used therewith is well known in the art and will not be described in any detail. Further information thereon may be obtained, for example, from British Patents 1558056 and 1561443 of Nippon Victor KK and other publications.

The object of the invention is to provide a VHS compatible or other cassette assembly of the kind described in a form which provides control and monitoring of its usage in an effective, convenient and economical manner, so as to provide fairer and more effective remuneration of the originators or providers of prerecorded media without undue restriction or inconvenience for the end user and with improved security against unauthorised use of the cassette assembly.

According to the invention there is provided a cassette assembly as defined by Claim or Claim 13 of the appended claims, and in another aspect a method of regulating and charging for use of pre-recorded works as defined by Claim 14 thereof.

The term "coded key or key input signal" used herein is intended to comprise inter alia conventional mechanical keys cut to a predetermined code for physical insertion into and operation of a lock module of the control means, e.g. coacting with a cylinder-type lock; visibly or invisibly coded magnetic or optically read keys in card or other form for actuating an electromagnetic or electro-optical lock modules key signal generating or input devices transmitting coded pulses to a lock module e.g. remote infra-red key input signal devices, or input to combination or like lock modules by manual keying in or setting a digital code directly thereto.

Where count means and control means are provided they are preferably interconnected or otherwise inter-related so that a digital register or other readout is moved forward by an increment less than one unit as the stop element is restored to free condition and is only further moved forward to fully register said one unit when the count means responds to said transfer of all or at least a substantial part of the medium so as to preclude falsification of the register or readout total by repeated operation of the key or key input signal alone.

It is also preferred that the control means responds to set the stop element in the blocking condition only after transfer of a predetermined minor proportion of the medium back to the main reel by rewinding, thus permitting one full play-through of the tape together with limited rewind and replay of restricted portions only thereof but full rewinding for a further complete play-through being prevented unless and until the stop element has been so restored to free condition.

Embodiments of the invention are now described in further detail with reference to the accompanying drawings wherein:-

Figure 1 is a diagrammatic horizontal sectional view of part of a VHS compatible video cassette assembly in a condition ready for use,

Figure 2 is a like view with components thereof in a blocking condition following use, and

Figure 3 is a like view of an alternative embodiment.

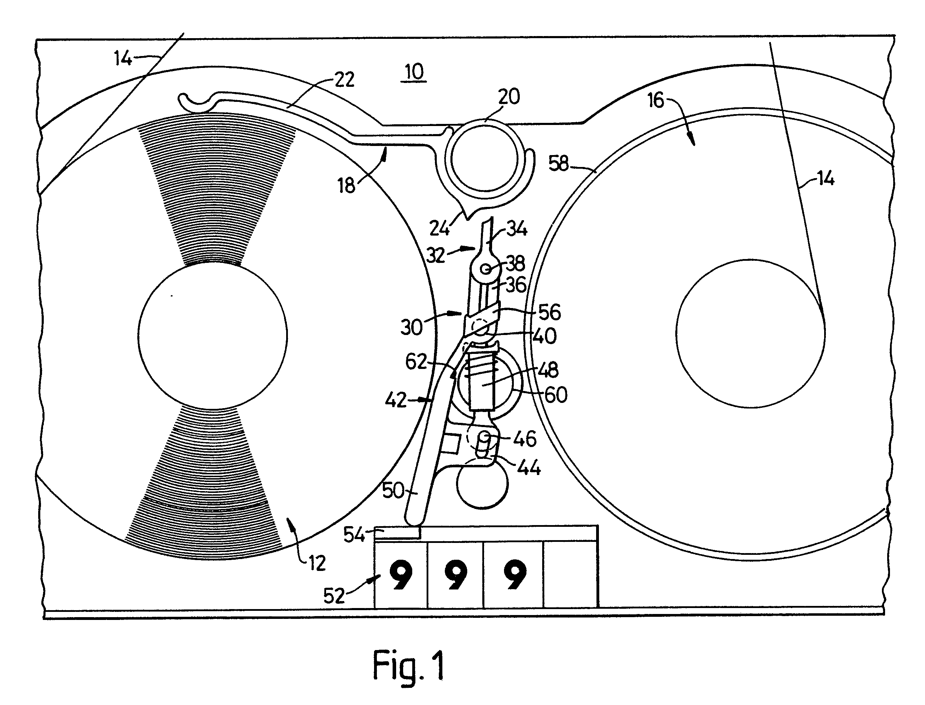

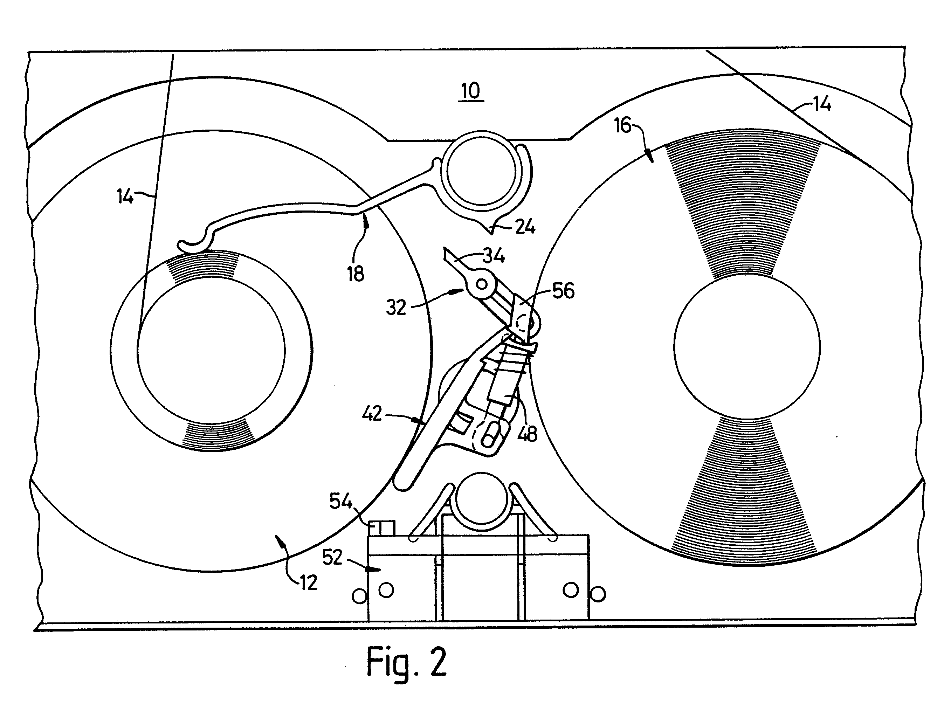

Referring to Figures 1 and 2 the VHS cassette assembly shown comprises a unitary tamper-proof housing 10 within which is a main tape reel 12 on which is wound a video tape 14 which has been pre-recorded, e.g. with a feature film to be hired or loaned from a video library. Housing 10 further contains a take-up reel 16 with the leading end of tape 14 anchored to its central hub after being led round guide rollers and through apertures of the assembly between the reels in known manner to cooperate with and for operation in VHS type record and playback apparatus.

Located in the housing generally between the reels 12 and 16 is control and count means now described in greater detail. A sensor device in the form of a detector lever 18 is pivoted on a cylindrical boss 20 midway between the reels toward the back of housing 10. Lever 18 is lightly resiliently loaded so that an elongated arm 22 thereof is urged into engagement with the periphery of the turns of tape on main reel 12, thus lever 18 swings angularly clockwise as viewed in the drawings as tape is wound off reel 12 in the forward or play direction, and it is pivoted in the opposite direction when tape is rewound onto reel 12.

Lever 18 further includes a short triggering nib 24 extending radially of boss 20.

The control means further includes a spring loaded toggle action linkage 30 lying generally laterally across the central region of housing 10 from back to front between the reels.

Linkage 30 comprises a trigger lever 32 having back and front arms 34, 36 extending to either side of a fixed fulcrum pivot 38 fast with the housing. The distal end of front arm 36 is provided with a hinged knuckle joint 40 linking it to a distal end of an offset lever 42.

The latter lever extends toward the front of the housing and has a cranked fulcrum portion 44 which is slotted to ride on a further fixed pivot 46 toward the front of the housing. A spring loaded extendable plunger link 48 is connected between said spigot 46 and the knuckle joint 40 to complete the toggle linkage.

In the position shown in Figure 1 plunger link 48 urges joint 40 overcentre with respect to pivots 38 and 46 to the left as viewed in the drawing so holding the back arm 34 of trigger lever 32 in the path of movement of the triggering nib 24 on detector lever 18.

In this condition a forward projection 50 of the main part of offset lever 42 is at its foremost position.

A miniature multi-drum (e.g. reading up to 999) cyclometer type mechanical register counter 52 similar to those used on audiotape recorders is mounted within housing 10 adjacent its front wall and readable through a small window in the front or top wall of the housing. Projection 50 engages the operating member 54 of counter 52 in the Figure 1 position holding it inwardly so that the counter has been shifted by approximately half of a single increment of one unit, i.e. the units drum will register a halfway position between successive digits. In this embodiment the counter moves forward only and the registered total is not reduced on rewind of the tape, and the mechanism is not accessible to the user to prevent tampering, nor is any facility provided for resetting or zeroing the counter. However in some applications subtraction on rewind, and/or a zeroing facility might be provided.

Reverting to trigger lever 32, its back arm 34 carries a small resiliently loaded hinged flap at its tip (not shown in the drawings) which allows nib 24 of detector lever 18 to pass one way i.e. from left to right as viewed without shifting trigger lever 32 but return movement in the opposite direction will engage arm 34 so pivoting lever 32 to collapse the toggle linkage 30 to the condition shown in Figure 2, i.e. changing over the control means from a free condition to a blocking condition to be further explained hereafter. At the same time projection 50 on offset lever 42 will be shifted clear of the counter operating member 54 allowing it to complete its outward movement and so complete the addition of one digit to the registered total.

The registered total count will remain as a substantially permanent record of usage of the tape in a similar way to the odometer recorded travel of a road vehicle.

Thus when the end user, i.e. the hirer or borrower of the video film, plays it through tape 14 will be transferred onto take-up reel 16 allowing detector lever 18 to pivot to its fullest extent clockwise. As it does so nib 24 passes the pivoted tip of back arm 34 without shifting the latter. When the tape is fully wound off reel 12 nib will have moved angularly somewhat beyond back arm 34 which will permit a short length of tape (at or possibly beyond the end of the film) to be rewound without disturbing the toggle linkage 30.

It will be noted that the arrangement permits the user to wind back portions of the tape during play in the main part of the film without restriction as nib 24 will not then have reached beyond back arm 34. This arrangement is considered more acceptable than a mechanism which prevents any rewinding or replay whatsoever, a user may not wish to watch a film all through at one sitting or may be disturbed e.g. by a telephone call while watching and may therefore require to go back a short way to re-establish the continuity of viewing. However the arrangement is designed to prevent any complete rewinding followed by a further playthrough i.e. one full viewing only is permitted. Few people want to watch only the extreme part of a film over and over again.

Said repeat replaying is prevented by brake mechanism of the control means. This comprises a stop element in the form of a small brake pad 56 mounted on the toggle linkage 30 above knuckle joint 40. When the toggle linkage has collapsed so that the control means is in its blocking condition this pad bears on the periphery of the upper flange of the take-up reel 16, this flange being provided with a light peripheral tyre 58 of a high friction material, conveniently a large diameter rubber "O" ring is used. The angling of the acting face of pad 56 (which may be provided with ratchet tooth-like serrations) is such that it allows rotation of take-up reel 16 in the anticlockwise direction i.e. for rewinding the tape but prevents rotation in the opposite direction i.e. the play or fast forward direction. The tape operation mechanism of the standard VHS player includes safety provision which precludes operation if the reels are blocked e.g. by a tape jam and the braking force is sufficient to cause this safety mechanism to operate i.e. forward winding or play is safely prevented without any risk of damage to the tape or mechanism.

In this way the user can rewind the tape following viewing so that it is ready to return to the tape library but he or she can play the tape through once only and the hire charge (if hiring is involved) will be in respect of this single viewing. Multiple play through on a single hiring is precluded and this will deter unauthorised loan or passing on of the tape to non-library subscribers.

In order to reset the control means, i.e. the toggle linkage 30 and associated stop element i.e. brake pad 56 to a free condition i.e. as in Figure 1 a key operated lock is incorporated.

In the present example this takes the form of a small cylinder-type lock 60 accessible through the top wall of the housing 10 centered between reels 12 and 16 generally above the plunger link 48 (its position is shown only in outline in the drawings).

The inner end of the lock cylinder carries a pin (not shown) which, when the cylinder is rotated by means of the key anticlockwise as viewed in the drawings, engages the righthand face of the main part of offset lever 42 and, as it rotates, engages in a notch or step 62 thereof urging it forwardly and to the left until it carries the toggle linkage overcentre as shown in Figure 1. The lock cylinder will be resiliently sprung to return to a rest position for withdrawal of the key taking the operating pin clear once more of lever 42.

The video library will hold the key (which will usually be standard to a number of cassette assemblies) so that only the library can reset the control means to the free condition for further play-through of the tape i.e. on further lending or hiring to the same or another end user.

The invention may be combined with the VHS compatible or other two-part cassette assembly of our copending British application 8807936 dated 5 April 1988. In this case the counter operating sensor means and counter readout means would be incorporated in the cartridge sub-cassette which contains the single reel holding the stock of film, tape or other medium with the advantage, as described in that patent application, of substantially reduced bulk and cost of the sub-cassettes which would be held by the library or agency outlet as referred to above. In said combination the control means may operate by preventing the engagement together of the two parts for drive connection to be transmitted to one or other reel for some applications.

It is contemplated that the cassette assembly or sub-assembly will normally have control means and counter fitted at the time of manufacture, but the housings or casings thereof may be formed, e.g. moulded, to provide a location for the appropriate components if required, i.e. counters and control means could be provided as separate items to be fitted, e.g. by a simple snap-in non-reversible press fit, by the user e.g. supplier of the recording, video tape library or the like if and when required.

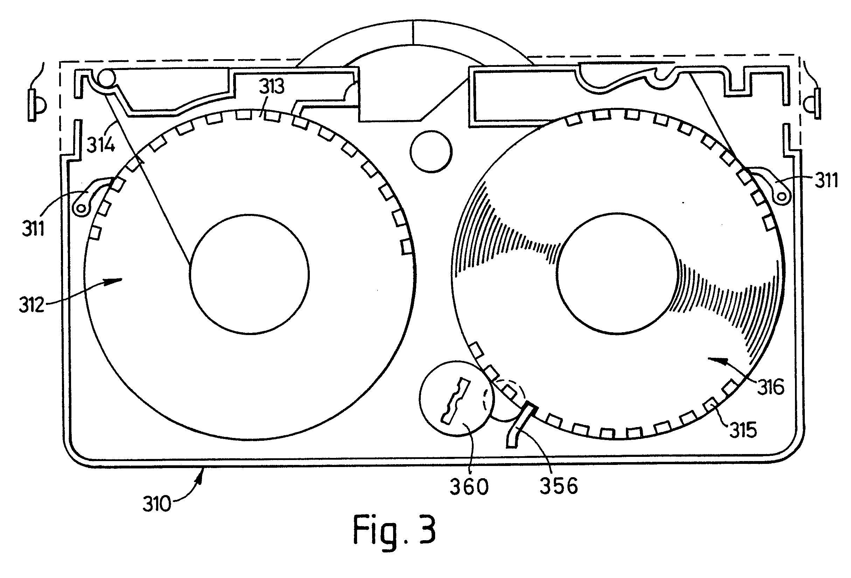

Figure 3 shows an alternative embodiment, again in the form of a VHS cassette assembly having a housing 310 containing main and take up reels 312, 316 carrying video tape 314. In this drawing the tape is shown wound off reel 312 following play, as with Figure 2.

The only re-arrangement of the normal VHS type mechanism within this cassette assembly is that the standard control pawls 311 (shown schematically) which coact with respective toothed or notched rims 313, 315 of the reels to prevent their rotation when the cassette is not inserted in the VHS recorder/player are moved from their normal position between reels in the rear part of housing 310 (i.e. on the side opposite that along which the flight of tape between the reels is guided) to the opposite corners of housing 310 in the front portion thereof.

The space thus left clear at the rear centre of housing 310 is occupied by control means including a backstop 356 pivoted or otherwise changeable within housing 310 between a blocking position or condition at which it coacts with the toothed or notched rim 315 of the take-up reel 316 independently of control pawls 311 to permit rotation of that reel in the forward direction only, i.e. for forward play of tape 314 but not permitting rewinding for subsequent further play-back, rotation of reel 316 in the anti-clockwise direction as viewed in the drawing being prevented. This is subject only to incorporation of the limited play-back facility as an optional feature referred to hereafter.

Positioned on a vertical axis centrally of said rear part of housing 310 is a small mechanical cylinder lock 360 which can only be operated by the correct key coded by cutting to match the lock. Lock 360 can be operated by means of the key to coact mechanically with the backstop 356 to change it selectively to a free condition at which it does not inhibit rotation of the reels in either direction, i.e. to enable re-winding to be carried out.

In this example, if the cassette assembly containing a pre-recorded tape has been hired or borrowed from a video library, the library user can watch a single play-through of the tape (and can also use the fast forward, pause or stop facilities of the player) as referred to above but, in this example, cannot rewind it for a second playing. The tape has to be returned to the library, who will hold the key fitting lock 360, for re-winding or before rewinding can be effected. If the user wants to watch the tape again a further fee can be charged by the library.

Various modifications of the last described embodiment are contemplated. For example the backstop 356 may be arranged to act on the rim 313 of main reel 312 instead of on take-up reel 316 and/or the back stop may act on both reels together.

A counter may be incorporated in this embodiment as described with reference to Figures 1 and 2.

A further modification is provision for allowing repeat viewing of a portion of the tape only. A sensor may be incorporated to detect when a given length of tape has been wound onto or off one or other of the reels, for example a flange of one reel may include an aperture at a predetermined radius through which the presence or absence of turns of tape on the reel at that point can be detected and the backstop 356 or other stop means be changed to or from the free condition in response thereto. In this way a predetermined period or section of the content of the tape, for example the first hour or half hour may remain freely available for repeat viewing (re-winding not inhibited up to that point) but the other part of the content of the tape will remain under restriction, one viewing only and no re-wind.

To enlarge further on the system of use of the assemblies incorporating the invention, it is contemplated that an originator, main distributor or other provider of bulk pre-recorded tapes, e.g. a film production or distribution company, will distribute them to video libraries and other intermediate distributors or outlets in bulk noting the registered counter totals of the cassette assemblies as they are delivered.

The library or other outlet (which could be a supermarket, small shop or even a home agency, possibly supplied by post) will in turn hire out or lend the tapes in the usual way except that the end user will in effect pay for a single viewing only as referred to above, if he or she requires further viewing the tape will have to be returned to the outlet for the key to be used to reset the control means (and incidentally, the counter will be advanced accordingly).

When the tapes are returned to the main distributor or other provider the number of viewings can be read off from the registered total of the counters and charging will be mad to the intermediate distributor or outlet based on the number of viewings shown. Alternatively the provider may call round at the libraries or other outlet premises to check on the tapes in stock, exchange and update the selection and at the same time collect the charges e.g. at weekly or monthly intervals.

Another important aspect commercially of the described arrangement is that the main distributor or other provider is able to have a reliable assessment of how popular or unpopular particular films are and can tailor the material provided much more closely to market demand which should enable substantially more profitable operation, unpopular films which are taking up shelf space can be withdrawn and extra copies of popular lines can he readily provided.

The "turn round" time of the tapes will be quicker as a borrower has no incentive to keep them once watched. Wear and tear on tapes is directly related to the number of revenue producing hirings, thus there may well be savings in cost which can be passed to users.

The use of the invention may also make a valuable contribution to the continuing problem of fair return and enforcement of copyright for authors, film producers and the like as a royalty which is directly related to the number of hirings and, more importantly, the number of actual viewings can readily be calculated, included as a percentage of the hiring charges which will be passed along the line to the ultimate user, and can be accounted for reliable and quickly to those entitled to the royalties.

The arrangement and mechanism described above can readily be incorporated into the standard type of VHS video cassette without undue difficulty or complication and is simple and reliable in use. It is believed that, although there will be some addition to the cost of the cassette hardware, any increase will readily be recouped and covered by the more efficient collection of hire charges and that cassettes incorporating the invention will be commercially feasible even if they are regarded as disposable items once the video film or other material has reached the end of its life.

Provision could be incorporated for resetting the counter to zero e.g. by means of another key operated mechanism, though for most practical applications it is anticipated that this will not be necessary, indeed the usual hiring life of a feature film is somewhat less than the 999 maximum total provided by a three digit counter. If necessary a non-resettable four or more digit counter could be incorporated at little extra cost.

The facility allowing rewinding by the end user is preferred because it is common practice to require the hirer or borrower to rewind the tape before return to save the library or other outlet the time and trouble of doing so and this requirement will be particularly convenient where the outlet is, for example, a supermarket where minimum handling and processing is essential for efficient operation. However, as described above, the mechanism can readily be arranged to prevent winding of the tape in either or both directions once changeover to the blocking condition had taken place and this may be desirable in some applications.

A further advantage of the invention, particularly where the material on the tape is unsuitable for general viewing, e.g. adult material not suitable for children, is that the end user can keep effective control of viewing in that further or repeat viewing cannot take place and it will be readily apparent if and when a tape has been viewed right through. There is increasing concern about films designated for adult viewing only being obtained by children from video libraries and/or being viewed clandestinely if available in the home and the invention fulfills a need in this direction also.

While it is anticipated that the primary use of the invention will be in connection with pre-recorded video tapes it is contemplated that it may have other applications where playback of a prerecorded medium is required to be monitored or controlled, for example in controlling the usage of pre-programmed computer software or other copyright material, or preventing and/or detecting unauthorised access to or play-back of confidential video or other recordings, by computer data tapes or the like as in business, commercial or administrative applications. A hidden counter could be used which is non-visible and inaccessible to all but authorised persons, e.g. covered by a flap only accessible by use of the key used to reset the cassette for further play.

Similarly a cassette or cassettes used in the home may be key controlled by the home user e.g. an adult, so as to prevent unauthorised use by children or other members of the family e.g. the watching of unsuitable content; or possibly the arrangement could be adapted or selectively operable to prevent unauthorised recording on the tape which might delete content which had not yet been watched or was not otherwise finished with.

As referred to above various forms of lock means and coded key or key input signals can be used. Thus a video library having a large number of tape cassettes may operate the lock means of all of them by a commonly coded key or may use a coded magnetic card, optical key or card or infrared remote key input device, possibly built into or combined with a re-winding machine for speedy and efficient preparation of the tape for further hiring or loan.

## Claims

1. A cassette assembly comprising a tamper-resistant housing (10), main and take-up reels (12, 16) operatively disposed within the housing for connection with play-back and/or recording apparatus using the assembly, a stock of film, tape or other recording medium (14) being operatively held or received on the main reel for transfer to the take-up reel by forward winding in said apparatus as for playing a pre-recorded medium and for rewind back onto the main reel following play through; characterised by control means (18, 30) mounted in the housing including a stop element (56) changeable between a free condition at which winding of the medium in either direction is unrestricted by said means and a blocking condition at which transfer of the medium from reel to reel in at least one direction is prevented or limited, and lock means (60) coacting directly or indirectly with the stop element to preclude a successive operation of the assembly following changeover of the stop element to the blocking condition, the lock means being operable only by application of a coded key or key input signal to free the stop element for restoration to the free condition.

2. An assembly as in Claim 1 characterised in that the control means (18, 30) is set automatically in the blocking condition consequent on operation of the assembly beyond that needed to play the medium (14) through completely once only with or without subsequent rewinding of all or any of the medium.

3. An assembly as in Claim 1 characterised in that the control means (356) in its blocking condition automatically prevents rewinding of the tape or other medium (314) from the take up reel (316) onto the main reel (312).

4. An assembly as in Claim 1, 2 or 3 characterised in that the stop element (56, 356) acts directly on a said reel (12, 16; 313; 316) to hold it against rotation in at least one direction when the control means is in blocking condition.

5. An assembly as in any preceding claim characterised in that the control means is changed automatically from the free to the blocking condition at or after a predetermined point or stage of operation of the assembly.

6. An assembly as in Claim 5 characterised in that the control means includes a sensor device (18) operating to detect transfer of a predetermined quantity of the tape or other medium (14) from one reel to the other so as to shift the stop element (56) into blocking condition on transfer of said quantity.

7. An assembly as in Claim 5 or 6 characterised in that said sensor device responds only to transfer of the tape or other medium in a selected direction of winding.

8. An assembly as in Claim 5, 6 or 7 characterised in that the control means responds to set the stop element (56) in blocking condition only after transfer of a predetermined proportion of the tape or other medium (14) back into the main reel (12) by rewinding whereby a single full play through of the tape or medium together with rewinding and replay of restricted portions only thereof is permitted but a further complete play-through after full rewinding is prevented unless and until the lock means (60) is operated to restore the control means to the free condition.

9. An assembly as in any preceding claim characterised in that the lock means (60, 360) is a lock operated by a mechanical key cut to predetermined code for physical insertion into and operation of the lock.

10. An assembly as in any preceding claim characterised by count means (52) responsive to transfer of all or at least a substantial part of the medium (14) from one reel to the other to provide a visible or otherwise detectable record or readout on the cassette of the total number of said transfers effected.

11. An assembly as in Claim 10 characterised in that the count means (52) is operated in response to operation of the control means.

12. An assembly as in Claim 11 characterised in that the count means (52) is acted on by an element (42) of the control means to move said record or readout forward by an increment less than one unit as the control means is restored to free condition and is only further moved forward to fully register said one unit on subsequent transfer of all or at least a substantial part of the medium (14) from reel to reel.

13. A cassette assembly comprising a tamper-resistant housing (10), main and take-up reels (12,16) operatively disposed within the housing for connection with play-back and/or recording apparatus using the assembly, a stock of film, tape or other recording medium (14) being operatively held or received on the main reel for transfer to the take-up reel by forward winding in said apparatus as for playing a pre-recorded medium and for rewind back onto the main reel following play through; characterised in that it further comprises :

(a) control means including a stop element (56) changeable between a free condition and a blocking condition at which transfer of the medium from reel to reel in at least one direction is prevented, the control means being automatically set in the blocking condition consequent upon operation of the assembly beyond that needed to play the medium through completely once only with or without subsequent part or full rewinding, the stop element being restored to the free condition only by coaction with a coded key or key input signal applied to the control means; and

(b) count means (52) responsive to transfer of all or at least a substantial part of the medium from one reel to the other in at least one direction to provide a visible or otherwise detectable record or readout on the cassette of the total number of said transfers effected.

14. A method of regulating and charging for the use of copyright or other works pre-recorded onto tape, film or other medium and provided in cassette assemblies of the kind described characterised by the steps of forming said cassette assemblies as in any one of Claims 10 to 13 hereof; providing a stock of said cassette assemblies to an intermediate distributor or other outlet on terms that hire, leasing and/or author's or other copyright royalties or the like be paid according to usage on the basis of the totals registered by the count means of each cassette assembly; and the intermediate distributor or other outlet being provided with coded keys or key input means appropriate to those cassette assemblies for enabling resetting of their control means to free condition following the return of the cassette assemblies to said intermediate distributor or other outlet by the end users thereof so enabling charging of said end users at an appropriate rate for each single play-through of the respective medium which they make.

Fig. 1

EP 0 339 916 A1

Fig. 2

EP 0 339 916 A1

Fig. 3

EP 0 339 916 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4702434 (R.BRAUER) <br> * abstract; figures - * <br> * column 2, line 30 - column 3, line 65 * | 1-4, 9-11 | G11B23/087 <br> G11B23/28 |
| A | | 12-14 | |
| X | EP-A-064859 (SONY CORP) <br> * claims -; figures - * | 1-4, 9 | |
| A | | 13, 14 | |
| X | EP-A-054505 (CHECK VIEW SYSTEM) <br> * claims -; figures - * | 1, 3, 5-12 | |
| A | | 13, 14 | |
| X | EP-A-120611 (E.J.DICKSON) <br> * page 1, line 5 - page 3, line 5; figures - * | 1-4, 9 | |
| A | | 13, 14 | |
| X | US-A-4632335 (E.J.DICKSON) <br> * abstract; claims -; figures - * | 1-4, 9 | |
| A | | 13, 14 | TECHNICAL FIELDS SEARCHED (Int. Cl.4) |
| P,X | WO-A-8803312 (SECURITY TWO) <br> * abstract; claims -; figures - * | 1, 2, 4, 9 | |
| P,A | | 13, 14 | G11B |
| P,A | EP-A-266983 (D.H.RUBENSTEIN) <br> * abstract; claims -; figures - * | 1, 3-8, 10-12 | |
| A | WO-A-8401657 (M.BEHRENDTZ) <br> * page 3, line 9 - page 4, line 28; figures - * | 1, 3, 6, 10, 11 | |
| A | WO-A-8403791 (A.LEONE) | | |
| A | WO-A-8606536 (PORT JACKSON FILM) | | |

The present search report has been drawn up for all claims

| Place of search | Date of completion of the search | Examiner |
|---|---|---|
| THE HAGUE | 20 JUNE 1989 | DECLAT M.G. |